# EUROPÄISCHE PATENTANMELDUNG

(11) **EP 2 664 425 A2**
(43) Veröffentlichungstag der Anmeldung: **20.11.2013**
(21) Anmeldenummer: 13175804.7
(22) Anmeldetag: 24.11.2010
(51) Int. Cl.: B26D 5/26, B26D 5/32, G01N 23/06, B26D 7/30, B26D 7/06, A22B 5/00, B26D 5/00

(54) **Verfahren zum Qualitätsklassieren von Lebensmittelscheiben eines Lebensmittelriegels**

(30) Priorität: 23.12.2009 DE 102009060536; 06.04.2010 WO PCT/EP2010/002149; 30.04.2010 DE 102010019096
(62) Teilanmeldung aus: 10790724.8
(71) Anmelder: CFS Bühl GmbH, 87437 Kempten (DE)
(72) Erfinder: Schmeiser, Jörg, 87487 Wiggensbach (DE); Quaglia, Silvio, 20142 Milano (IT); Maidel, Rainer, 87471 Durach (DE); Maier, Wilfried, 87463 Probstried (DE)
(74) Vertreter: Wolff, Felix

(57) **Zusammenfassung**

Die vorliegende Erfindung betrifft ein Verfahren zur Erzeugung von Lebensmittelportionen mit einer Aufschneidevorrichtung, insbesondere einem Slicer, die aus mindestens einer Lebensmittelscheibe bestehen und die mit der Aufschneidevorrichtung von einem Lebensmittelriegel abgeschnitten wird, wobei der Lebensmittelriegel vor dem Aufschneiden der jeweiligen Lebensmittelportion, vorzugsweise mit Röntgenstrahlen, durchstrahlt wird und die dabei ermittelten Daten zur Steuerung der Ausschneidevorrichtung und/oder einer ihr nachgeordneten Vorrichtung herangezogen wird.

## Beschreibung

Die vorliegende Erfindung betrifft ein Verfahren zur Erzeugung von Lebensmittelportionen mit einer Aufschneidevorrichtung, insbesondere einem Slicer, die aus mindestens einer Lebensmittelscheibe bestehen und die mit der Aufschneidevorrichtung von einem Lebensmittelriegel abgeschnitten wird, wobei der Lebensmittelriegel vor dem Aufschneiden, vorzugsweise mit Röntgenstrahlen, durchstrahlt wird und die dabei ermittelten Daten zur Steuerung der Ausschneidevorrichtung und/oder einer ihr nachgeordneten Vorrichtung herangezogen wird.

Ein derartiges Verfahren ist beispielsweise in der DE 10 2005 010 183 beschreiben. Lebensmittelprodukte werden heutzutage oftmals in Portionen, die aus mehreren Lebensmittelscheiben bestehen, angeboten. Die Lebensmittelscheiben werden beispielsweise von einem Lebensmittelriegel abgeschnitten und dann oder dabei zu Portionen konfiguriert. In der Regel weist der Lebensmittelriegel über seine gesamte Länge keine gleichbleibende Qualität auf. Beispielsweise weist Hartkäse im Bereich des Anfangs und des Endes oftmals eine zu geringe Anzahl und/oder Größe an Löchern auf und entspricht somit nicht den gewünschten Qualitätsanforderungen. Dasselbe gilt auch für Fleischprodukte, die beispielsweise einen zu geringen und/oder im Querschnitt zu kleinen Anteil an Muskelsträngen aufweist. Solche Lebensmittelscheiben müssen entweder aussortiert und/oder als Lebensmittelscheibe mit verminderter Qualität weiterverarbeitet bzw. am Markt angeboten werden.

Es war deshalb die Aufgabe der vorliegenden Erfindung ein Verfahren zur Verfügung zu stellen, mit dem eine Qualitätsklassierung von Lebensmittelscheiben, die von einem Lebensmittelriegel abgetrennt werden, möglich ist.

Gelöst wird die Aufgabe mit einem Verfahren zur Erzeugung von Lebensmittelportionen mit einer Aufschneidevorrichtung, insbesondere einem Slicer, die aus mindestens einer Lebensmittelscheibe bestehen und die mit der Aufschneidevorrichtung von einem Lebensmittelriegel abgeschnitten wird, wobei von dem Lebensmittelriegel vor dem Aufschneiden der jeweiligen Lebensmittelportion mit einem Messmittel, vorzugsweise einem Durchstrahlscanner, besonders bevorzugt mit Röntgenscanner Daten über dessen innere und/oder äußere Struktur erfasst werden, wobei
- die ermittelten Daten in einer Daten-Matrix erfasst werden,
- diese Matrix ausgewertet wird und
- die Auswertung zur Steuerung des Aufschneidevorgangs und/oder zum Klassierung der aufgeschnitten Lebensmittelscheiben herangezogen wird.

Die zu diesem erfindungsgemäßen Verfahren gemachten Ausführungen gelten für die anderen erfindungsgemäßen Verfahren gleichermaßen und umgekehrt.

Die vorliegende Erfindung betrifft ein Verfahren, bei dem ein Lebensmittelriegel in eine Vielzahl von Lebensmittelscheiben aufgeschnitten wird und mindestens eine, vorzugsweise eine gewisse Anzahl von Lebensmittelscheiben, zu einer Lebensmittelportion zusammengestellt werden. Das Aufschneiden des Lebensmittelriegels erfolgt mit einer Aufschneidemaschine, einem sogenannten Slicer.

Ein Lebensmittelriegel im Sinne der Erfindung ist vorzugsweise ein Wurst-, Käse oder Schinkenriegel. Diese Lebensmittelriegel weisen oftmals einen im wesentlichen konstanten Querschnitt auf. In der Regel sind die Lebensmittelriegel, wie eine Wurst, länglich, d.h. ihr Querschnitt ist wesentlich kleiner als ihre Länge. In der Regel werden die Lebensmittelscheiben senkrecht zur Längsachse abgetrennt. Bei dem Lebensmittelriegel kann es sich aber auch um einen Naturschinken handeln. Der Lebensmittelriegel kann auch aus mehreren Teilstücken zusammengesetzt sein, wie es beispielsweise bei Pressschinken der Fall ist.

Vor dem Aufschneiden wird die innere und/oder äußere Struktur des Lebensmittelriegels mit einem Messmittel ermittelt. Beispielsweise handelt es sich bei dem Messmittel um einen Durchstrahlscanner, insbesondere um einen Röntgenscanner. Die Ermittlung der inneren und/oder äußeren Struktur des Lebensmittelriegels wird im Folgenden beispielhaft anhand eines Röntgenscanners beschreiben, wobei auch andere Messmittel erfindungsgemäß geeignet sind. Ein solcher Röntgenscanner, weist eine Strahlenquelle und einen, beispielsweise fotosensitiven, Sensor als Empfänger auf, der sich auf jeweils gegenüberliegenden Seiten des Umfangs des Lebensmittelriegels befindet. Dieser Sensor ist beispielsweise eine Zeilenkamera. Die Strahlenquelle sendet Strahlen aus, die auf einer Seite des Umfangs des Lebensmittelriegels eintreten, den Lebensmittelriegel auf dessen gesamter Breite durchdringen und auf der gegenüberliegenden Seite von dem Sensor empfangen werden. Dieser Sensor misst die lokale Intensität der empfangenen Strahlen, die beim Durchstrahlen des Lebensmittelriegels abgeschwächt werden, wobei die Abschwächung von der lokalen Beschaffenheit des Lebensmittelriegels, beispielsweise von dessen Dichte, abhängt. Die Durchstrahlung erfolgt mindestens über die gesamte Breite des Lebensmittelriegels, wobei mehrere diskrete Messwerte als Funktion der Breite ermittelt werden. Der Durchstrahlscanner ist vorzugsweise ortsfest vorgesehen und der Lebensmittelriegel wird, vorzugsweise entlang seiner Längsachse durch den Durchstrahlscanner transportiert. Dadurch werden diskrete Messwerte über die gesamte Länge des Lebensmittelriegels ermittelt. Durch mehrere Messwerte pro Messung als Funktion der Breite und einer Vielzahl von Messungen in Längsrichtung ergibt sich eine Datenmatrix des jeweiligen Lebensmittelriegels. Bei der Messung liegt der Lebensmittelriegel beispielsweise auf einem Transportband, das zwischen der Strahlenquelle und dem Sensor angeordnet ist. Der Fachmann versteht, dass der Scanner auch relativ zu dem Lebensmitteriegel bewegt werden kann. Für diesen Fall gelten die oben und unten gemachten Ausführungen analog. Mit dem Messmittel kann die innere und die äußere Struktur des Lebensmittelriegels erfasst werden.

Die Daten, die von dem Messmittel erfasst werden, werden erfindungsgemäß in einer Daten-Matrix abgelegt. Vorzugsweise handelt es sich bei Daten-Matrix um eine zweidimensionale Darstellung der Raumdaten des Lebensmittelriegels; d.h. die Daten sind in einer Dimension, vorzugsweise der Höhe des Produktes, ein Summenwert, was oftmals schon durch das Messverfahren bedingt ist. Die Höhe des Produktes ist hier dessen Ausdehnung in der Vertikalen. Entlang der gesamten Breite und entlang der gesamten Länge des Lebensmittelriegels wird von dem Messmittel jedoch jeweils eine Vielzahl von Daten diskret ermittelt, so dass sich eine Daten-Matrix aus a x b Datenpunkten ergibt. Die Anzahl der benötigten Datenpunkte hängt von der gewünschten Genauigkeit ab. In einer bevorzugten Ausführungsform handelt es sich bei Daten-Matrix um eine dreidimensionale Darstellung der Raumdaten des Lebensmittelriegels, d.h. die Messdaten liegen entlang aller Raumrichtungen als diskrete Messdaten vor.

Vorzugsweise handelt es sich bei den Datenpunkten um Grauwerte, so dass die gesamte Daten-Matrix ein Grauwertbild des Lebensmittelriegels ergibt.

Aufgrund der Verteilung der Grauwerte in der Daten-Matrix erkennt ein Auswertemittel lokale Veränderungen in der Struktur, beispielsweise der Fleischstruktur. Beispielsweise lässt eine Veränderung in der Grauwertverteilung auf eine lokale Veränderung in der Struktur, beispielsweise die Grenzschicht zwischen Muskel- und Fettgewebe, schließen. Ein unerwartet hoher oder niedriger Grauwert lässt auf einen Fremdkörper, beispielsweise ein Stück Metall, ein Knochensplitter und/oder ein Bluterguss, oder einen Lufteinschluss schließen. Ferner erlaubt die Verteilung der Grauwerte einen Rückschluss auf die lokale Breite des Produktes.

Das Grauwertbild wird vorzugsweise mit einer Bilderkennungssoftware bearbeitet. Aufgrund des Grauwertbildes erkennt die Bilderkennungssoftware bestimmte Strukturen, beispielsweise Muskelstrukturen, Löcher im Käse, Grenzschichten zwischen Teilen, aus denen der Lebensmittelriegel zusammengesetzt ist, Fremdkörper, Fettschichten und/oder unterschiedliche Salzgehalte.

Diese erkannten Strukturen werden abgespeichert und später eingesetzt, um den Aufschneidevorgang des Lebensmittelriegels bzw. das anschließende Klassieren der Lebensmittelscheiben zu steuern. Anhand dieser Information kann dann festgelegt werden, wie der Lebensmittelriegel aufgeschnitten werden soll, wie groß das Reststück am Anfang/Ende des Lebensmittelriegels sein muss und/oder die Lebensmittelscheiben werden anhand der gewonnenen Informationen klassiert.

Vorzugsweise erfolgt die Analyse durch einen Vergleich der Grauwerte mit Referenzdaten, aufgrund derer das Auswertemittel, beispielsweise die Bilderkennungssoftware, dann erkennt, welche lokale Struktur das Lebensmittel aufweist und/oder ob es sich um einen Fremdkörper handelt. Diese Referenzdaten können beispielsweise ein anderer Abschnitt dieses Lebensmittelriegels, historische Daten von Lebensmittelriegeln und/oder hinterlegte Referenzwerte, beispielsweise Grauwerte, sein, die mit einer bestimmten Struktur, beispielsweise Fett- oder Muskelgewebe korrelieren.

Die Durchstrahlung des Lebensmittelriegels erfolgt vorzugsweise scheibenweise, wobei die Scheiben vorzugsweise senkrecht zu der Längsmittelachse des Lebensmittelriegels angeordnet sind und/oder parallel zu der Führung des Schneidmessers vorgesehen sind. Die gewünschte Dicke einer solchen Scheibe, die als "Scannscheibe" bezeichnet wird, hängt von der gewünschten Messgenauigkeit ab. Vorzugsweise ist die Dicke der Scannscheibe jedoch kleiner als die von dem Lebensmittelriegel abzutrennende Lebensmittelscheibe. Der Durchstrahlscanner weist ein Mittel auf, das jeder Scannscheibe eine Koordinate x innerhalb des Lebensmittelriegels zuordnet, so dass alle Messwerte als Funktion der Längsachse x vorliegen und entsprechend in der Daten-Matrix abgelegt werden können. Pro Scannscheibe wird außerdem eine Vielzahl von Messwerten über die Breite der Scannscheibe ermittelt, die ebenfalls in der Matrix hinterlegt werden. So können die Messergebnisse, die als Funktion der Längsachse an die Aufschneidevorrichtung übergeben werden, beim Aufschneiden des Lebensmittelriegels, bei dem der Lebensmittelriegel parallel zu seiner Längsachse in Richtung eines Schneidmessers transportiert wird, das von seinem vorderen Ende und senkrecht zur Längsachse des Lebensmittelriegels Lebensmittelscheiben von dem Lebensmittelriegel abtrennt, eingesetzt werden. Da eine Auswertevorrichtung weiß welcher Teil, bezogen auf die Längsachse, des Lebensmittelriegels gerade aufgeschnitten wird, kann nach dem Aufschneiden ein Klassieren in unterschiedliche Güteklassen und/oder eine Aussortierung der jeweiligen Lebensmittelscheibe erfolgen.

Klassieren im Sinne dieser Erfindung bedeutet, dass die abgeschnitten Lebensmittelscheiben und/oder Abschnitte des Lebensmittelriegels in unterschiedliche Güteklassen eingeteilt und/oder vollständig verworfen werden.

Klassieren bedeutet beispielsweise anhand des Verlauf und/oder der Querschnittfläche mindestens eines Muskelstrangs die Lebensmittelscheibe in eine entsprechende Güteklasse einzuordnen.

Gemäß einem bevorzugten Gegenstand der vorliegenden Erfindung besteht der Lebensmittelriegel aus mehreren, vorzugsweise zwei, Teilstücken, die entlang einer Grenzfläche aneinanderstoßen und dort vorzugsweise stoffschlüssig miteinander verbunden sind, wobei die Daten Informationen über den Verlauf der Grenzfläche aufweisen und diese Information zum Aufschneiden des Lebensmittelriegels und/oder zum Klassieren der Lebensmittelscheiben in Güteklassen herangezogen werden.

Die Grenzfläche erstreckt sich, vorzugsweise zumindest abschnittsweise, entlang der Längsachse des Lebensmittelriegels.

Klassieren erfolgt in dem vorliegenden Fall anhand des Verlaufs der Grenzfläche innerhalb der jeweiligen Lebensmittelscheibe und/oder der Qualität der Grenzschicht, beispielsweise bezogen auf Form, Breite und/oder Farbe. Vorzugsweise ist die Güteklasse umso höher, je weiter die Grenzfläche in den Randbereich der jeweiligen Lebensmittelscheibe verschoben ist bzw. wenn gar keine Grenzfläche vorhanden ist und/oder wenn die Grenzfläche möglichst wenig sichtbar ist.

Gemäß einem bevorzugten Gegenstand der vorliegenden Erfindung, wird anhand der von dem Durchstrahlscanner ermittelten Daten die verwertbare Länge des Lebensmittelriegels ermittelt.

Die verwertbare Länge kann der gesamten realen Länge des Lebensmittelriegels entsprechen. Oftmals ist die verwertbare Länge jedoch geringer als die tatsächliche Länge, weil sich die Lebensmittelriegel in ihrem Anfangs- und/oder Endbereich oftmals verjüngen und somit oftmals nur zu kleine Lebensmittelscheiben von dem Lebensmittelriegel abgetrennt werden können. Außerdem können die Anfangs- und Endbereiche noch weitere Qualitätsmängel aufweisen, die sie als "Gutportionen" ungeeignet machen. Beispielweise kann das Anfangs- oder Endstück von Käse zu wenige Löcher aufweisen. Beim Aufschneiden von Lebensmittelriegeln wird oftmals mit Greifern gearbeitet, die sich in das Ende des Lebensmittelriegels krallen. Dieser Abschnitt des Lebensmittelriegels, der beispielsweise bis zu 2 cm betragen kann, ist dann ebenfalls für Lebensmittelscheiben in einer Lebensmittelportion ungeeignet und folglich nicht der verwertbaren Länge zurechenbar. Die von dem Durchstrahlscanner ermittelten Daten und/oder weitere Daten über die Aufschneidemaschine, beispielsweise den Greifer, erlauben vorzugsweise eine automatische Ermittlung der verwertbaren Länge.

Bei diesem bevorzugten Verfahren wertet eine Auswerteeinheit, beispielsweise ein Computer die Scanndaten, das Gewicht, die Länge und/oder die verwertbare Länge des Lebensmittelriegels vorzugsweise so aus, dass dem Lebensmittelriegel möglichst viele, vorzugsweise komplette, Portionen entnommen werden können. Besonders bevorzugt werden dabei vor dem Aufschnitt des jeweiligen Lebensmittelriegels die Daten so ausgewertet, dass einem Lebensmittelriegel möglichst viele Lebensmittelportionen entnommen werden, dass der "give away" gemäß Fertigverpackungsverordnung für alle Portionen so minimiert wird, dass möglichst viele Portion aus einem Lebensmittelriegel entstehen und/oder dass der "Give away" so gleichmäßig auf die Portionen verteilt ist, dass alle sicher über dem geforderten Mindestgewicht liegen.

Gemäß einem weiteren oder bevorzugten Gegenstand der vorliegenden Erfindung wird anhand der ermittelten Daten die verwertbare Länge des Lebensmittelriegels in n Portionen aufgeschnitten wird, die jeweils mindestens das geforderte Mindestgewicht aufweisen, wobei die letzte Portion des einen Lebensmittelriegels mit Lebensmittelscheiben von dem nächsten Lebensmittelriegel ergänzt wird und die Aufschneidevorrichtung oder eine sonstige Steuereinrichtung anhand der ermittelten Scanndaten weiß, welcher Gewichtsanteil und/oder wie viele Scheiben dieser Portion fehlen und den Aufschneidevorgang dementsprechend steuert, dass diese Portion mit Scheiben von dem nächsten Lebensmittelriegel ergänzt werden. Die unvollständige Portion muss dafür nicht gewogen werden.

In einer bevorzugten Ausführungsform wird die Aufschneidemaschine anhand der von dem Durchstrahlscanner ermittelten Daten so gesteuert, dass jede Lebensmittelscheibe einer Portion ein Mindestgewicht aufweist. Die Dicke und damit das Gewicht der Lebensmittelscheibe kann durch die Geschwindigkeit, mit der der Lebensmittelriegel in Richtung eines Schneidmessers transportiert wird relativ zu der Drehzahl des Schneidmessers, eingestellt werden.

In einer bevorzugten Ausführungsform wird die Aufschneidemaschine anhand der von dem Durchstrahlscanner ermittelten Daten so gesteuert, dass jede Portion eine Mindestanzahl oder eine Maximalanzahl an Lebensmittelscheiben aufweist. Die für die jeweilige Portion abzutrennende Länge wird errechnet und sodann in die gewünschte Anzahl von Lebensmittelscheiben unterteilt, die vorzugsweise zwischen einem Minimal- und einem Maximalwert liegt.

In einer bevorzugten Ausführungsform wird die Aufschneidemaschine anhand der von dem Durchstrahlscanner ermittelten Daten so gesteuert, dass jede Lebensmittelscheibe eine minimale oder eine maximale Dicke aufweist. Die Dicke der Scheibe kann durch die Geschwindigkeit, mit der der Lebensmittelriegel in Richtung eines Schneidmessers transportiert wird, eingestellt werden.

Vorzugsweise wird anhand der Daten-Matrix die lokale Höhe des Lebensmittelriegels ermittelt. Die lokale Höhe des Lebensmittelriegels kann insbesondere bei der Ablage der Produkte zu einer Portion eine Rolle spielen.

Vorzugsweise weist die Daten-Matrix lokale Temperaturdaten und/oder lokale Daten über den Salzgehalt auf. Diese Daten können zur Steuerung des Aufschneidevorgangs und/oder zum Klassieren von Relevanz sein.

Gemäß einer bevorzugten oder erfindungsgemäßen Ausführung der vorliegenden Erfindung werden die Daten zur Steuerung der Schneidgeschwindigkeit, und/oder zur Steuerung der Position des Schneidmessers eingesetzt. Die Schneidgeschwindigkeit ist in Regel proportional zu der Geschwindigkeit, mit der sich das Messer dreht. Je nachdem welche lokale Konsistenz der Lebensmittelriegel aufweist, kann er mit einer höheren oder geringeren Geschwindigkeit aufgeschnitten werden. Da diese lokale Konsistenz durch die ermittelten Daten des Lebensmittelriegels bekannt ist, kann die Schnittgeschwindigkeit entsprechend gesteuert werden. Ein Lebensmittelriegel wird dann beispielsweise mit unterschiedlichen Schnittgeschwindigkeiten aufgeschnitten.

Weiterhin erfindungsgemäß oder bevorzugt kann die Drehachse des Schneidmesserkopfes und/oder des Schneidmessers in Abhängigkeit von den ermittelten Daten verändert werden. Dadurch kann der Ort, an dem das Messer auf den Lebensmittelriegel auftritt und das Verhältnis zwischen Ziehen und Drücken beim Schneiden verändert werden.

Gemäß einem weiteren erfindungsgemäßen oder bevorzugten Gegenstand der vorliegenden Erfindung werden die Daten zur Steuerung der Portionsbildungsparameter eingesetzt. Aufgrund der ermittelten Daten wird insbesondere der Ablagetisch, auf den die abgeschnittenen Lebensmittelscheiben fallen, gesteuert. Insbesondere wird vorzugsweise sein Höhe, seine Ausrichtung in und quer zur Fallrichtung der Lebensmittelscheibe, seine Neigung um mindestens eine, vorzugsweise zwei senkrecht aufeinander stehende horizontale Drehachsen und/oder die Geschwindigkeit, mit der die fertiggestellte Portion abtransportiert wird.

Im Folgenden wird die Erfindung anhand der Figuren 1 - 7 erläutert. Diese Erläuterungen sind lediglich beispielhaft und schränken den allgemeinen Erfindungsgedanken nicht ein. Die Erläuterungen gelten für alle Gegenstände der vorliegenden Erfindung gleichermaßen.
- **Figur 1**: zeigt eine Aufschneidelinie.
- **Figur 2a und b**: zeigt ein Messmittel, hier einen Röntgenscanner.
- **Figuren 3a - c**: zeigt die gemessenen Daten als Funktion der Breite und der Länge des Lebensmittelriegels.
- **Figur 4**: zeigt weitere gemessene Daten eines Lebensmittelriegels.
- **Figur 5a und b**: zeigt eine Ausführungsform des erfindungsgemäßen Verfahrens.
- **Figur 6a und b**: zeigt noch eine Ausführungsform des erfindungsgemäßen Verfahrens.
- **Figur 7**: zeigt einen Slicer

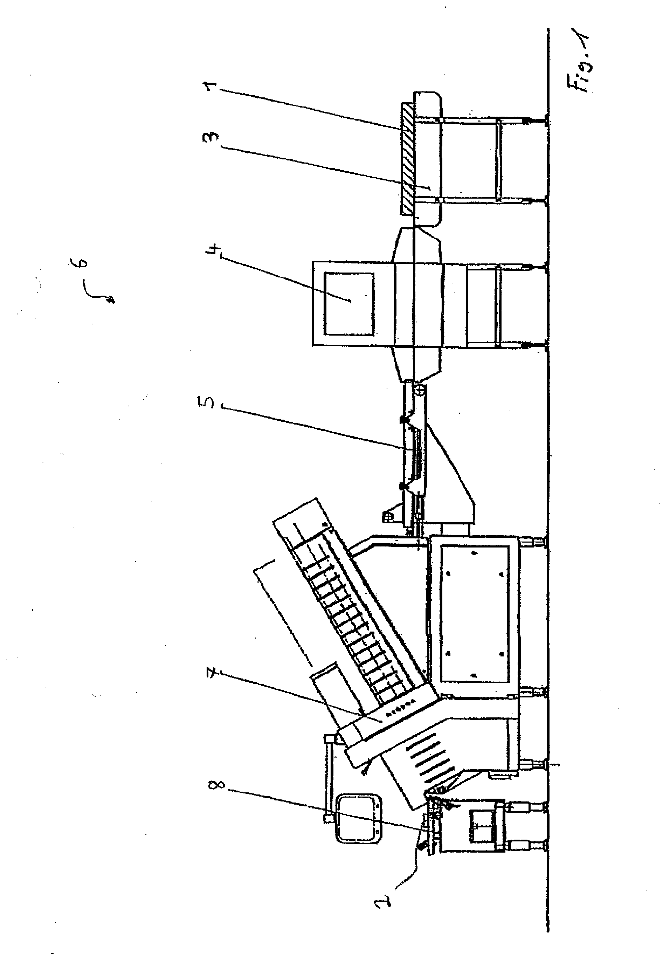

Figur 1 zeigt eine Aufschneidelinie, in der Lebensmittelriegel in Lebensmittelscheiben aufgeschnitten werden und dabei möglichst gewichtsgenaue Portionen erzeugt werden. Ein Lebensmittelriegel 1 wird mit einem Zuführband durch ein Messmittel, hier ein Durchstrahlscanner 4, vorzugsweise einem Röntgenscanner, gefördert. In dem Scanner wird das Produkt scheibenweise gescannt. Gegebenenfalls wird der Lebensmittelriegel 1 zunächst mit einer Waage 3 gewogen. Nachdem der Lebensmittelriegel gescannt worden ist, wird er mittels des Zuführförderbandes 5 in den Slicer 7 geladen. Dieses Zuführband kann auch einen Puffer umfassen, in dem bereits gescannte Lebensmittelriegel auf das Aufschneiden warten. Die von dem Durchstrahlscanner ermittelten Daten werden entweder direkt an die Aufschneidevorrichtung oder an eine sonstige Steuereinheit/CPU übergeben, wo sie bedarfsweise weiterverarbeitet werden. Der Aufschneidevorgang in der Aufschneidevorrichtung und/oder der Ablagevorgang der abgeschnittenen Lebensmittelscheiben wird nun anhand der beim Scannen ermittelten Daten gemäß den erfindungsgemäßen Verfahren gesteuert. Des Weiteren werden Lebensmittelscheiben gegebenenfalls in unterschiedliche Produktgruppen klassiert. Nach dem Aufschneiden können die jeweiligen Lebensmittelportionen an eine Wiegevorrichtung übergeben werden, um zu überprüfen, ob das gewünschte Sollgewicht eingehalten worden ist. Diese Daten können zur Kalibrierung der Datenauswertung des Durchstrahlscanners herangezogen werden. Der Fachmann erkennt, dass der Scanner auch innerhalb der Aufschneidevorrichtung 7, beispielweise im Bereich der Produktzufuhr angeordnet sein kann. In der Aufschneidevorrichtung können mehrere Lebensmittelriegel gleichzeitig aufgeschnitten werden.

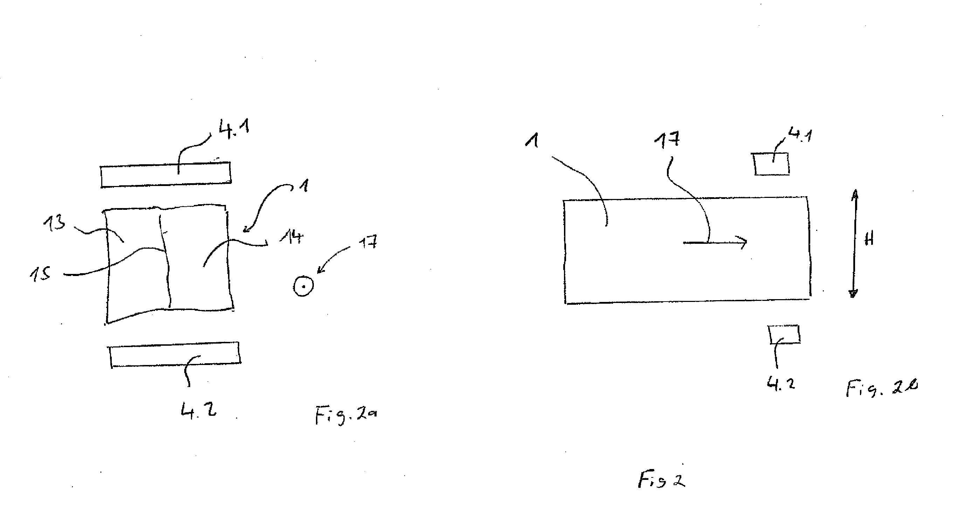

Figur 2 zeigt das Messen, hier Scannen eines Lebensmittelriegels 1 mit einem Durchstrahlscanner, nämlich einem Röntgenscanner. In dem vorliegenden Fall ist der Lebensmittelriegel 1 aus zwei Teilstücken 13, 14 zusammengesetzt. Figur 2a zeigt eine Vorderansicht und Figur 2b eine geklappte Seitenansicht des Lebensmittelriegels 1 bzw. des Durchstrahlscanners 4. Beim Scannen wird der Lebensmittelriegel so angeordnet, dass sich die Grenzfläche 15 im Wesentlichen parallel zur Durchstrahlrichtung des Durchstrahlscanners befindet, d.h., dass die Grenzfläche 15 im Wesentlichen parallel zu den Strahlen vorgesehen ist, die von einem Sender 4.1 ausgesendet bzw. von einem Empfänger 4.2 empfangen werden. Die Transportrichtung des Lebensmittelriegels ist durch den Pfeil 17 dargestellt, wobei der Lebensmittelriegel kontinuierlich oder intermittierend an dem Durchstrahlscanner vorbeitransportiert werden kann. Vorzugsweise handelt es sich insbesondere bei dem Empfänger 4.2 um einen Zeilenempfänger, beispielsweise eine Zeilenkamera, so dass mit dem Scannverfahren Daten in Form von Scannscheiben generiert werden können. In dem vorliegenden Fall stellen die gewonnenen Daten ein Integral über die Höhe H des Lebensmittelriegels dar, so dass sich eine zweidimensionale Daten-Matrix ergibt. Bei dem vorliegenden Messverfahren werden lokale Grauwerte des Lebensmittelriegels ermittelt, die beispielsweise einen Rückschluss auf dessen innere und äußere Struktur erlauben. Der Fachmann erkennt, dass die generierten Messwerte auch andere Werte sein können, die einen Rückschluss auf die innere und äußere Struktur des Lebensmittelriegels ermöglichen.

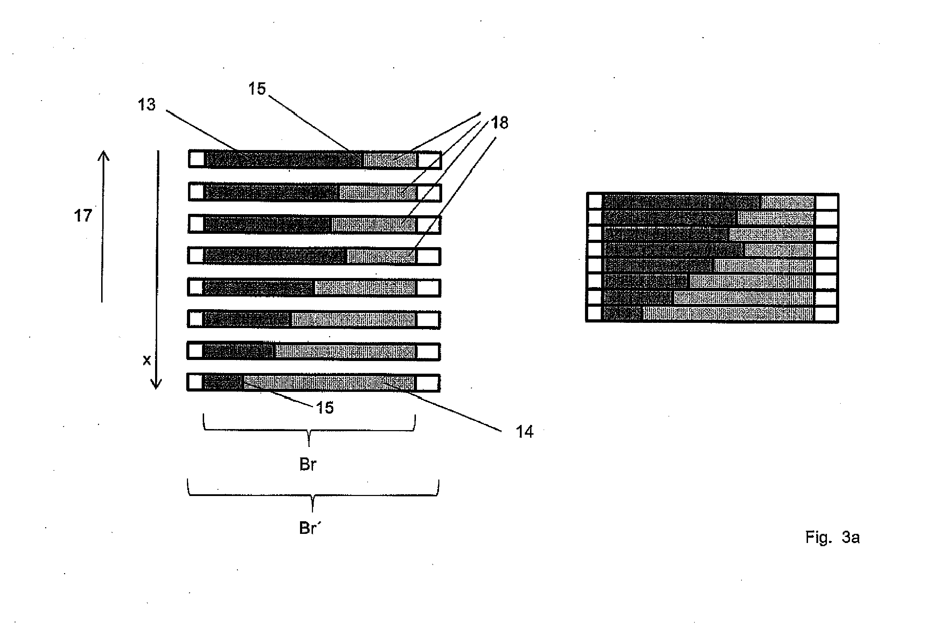

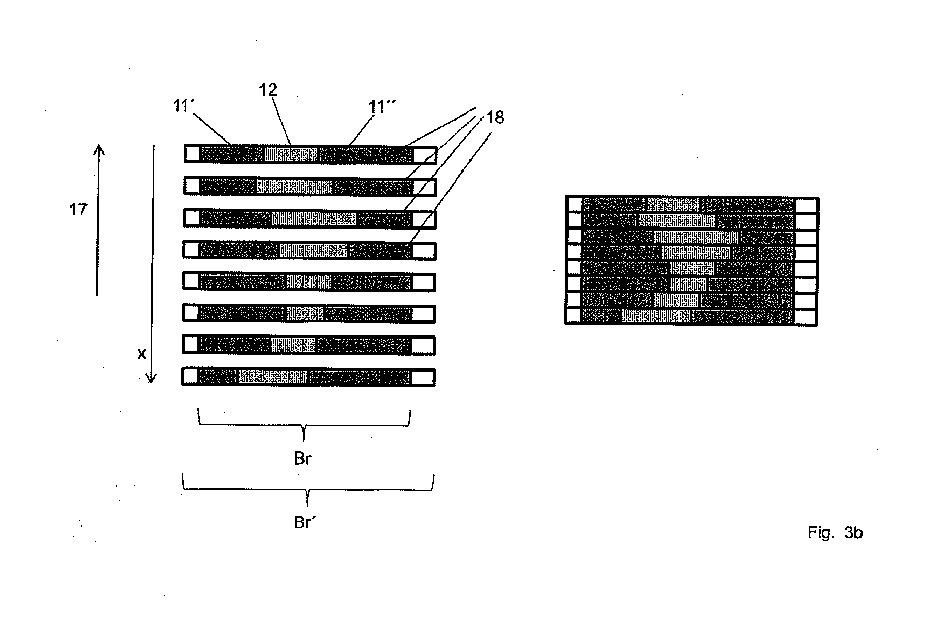

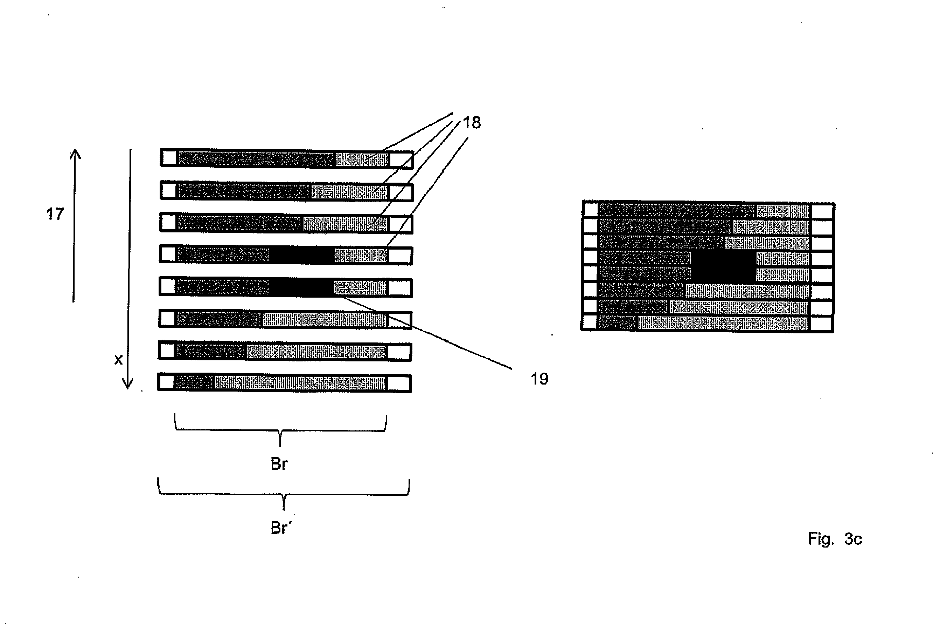

Die Figuren 3a - c zeigen beispielhaft die von einem Röntgenscanner gemäß Figur 2 ermittelten Daten pro Scanscheibe 18. Die Breite Br' des Scanners und damit jeder Scannscheibe 18 ist hier größer als die Breite Br des Lebensmittelriegels, so dass jede Scannscheibe auch Informationen über die tatsächliche lokale Breite Br des Lebensmittelriegels und damit der äußeren Struktur des Lebensmittelriegels liefert. Für die Qualitätsklassierung ist es wichtig, dass die Grauwertverteilung jeder Scannscheibe über deren gesamte Breite analysiert wird und dass mehrere diskrete Werte als Funktion der Breite vorliegen. Des weiteren müssen die Werte als Funktion der Längskoordinate x vorliegen. Die gesamte Länge des Lebensmittelriegels wird so analysiert. Die ermittelten Daten werden in einer Daten-Matrix erfasst, so dass sich ein zweidimensionales Datenfeld, beispielsweise ein Grauwertbild eines Lebensmittelriegels ergibt. Ein derartiges zweidimensionales Grauwertbild eines Lebensmittelriegels ist jeweils im rechten Teil der Abbildungen 3 zu erkennen. Man erkennt, dass jede Scannscheibe einen dunkleren Bereich aufweist, in dem relativ weniger Strahlen absorbiert worden sind und einen helleren Bereich, in dem relativ mehr Strahlen absorbiert wurden. Dieses Gesamtbildbild wird dann, beispielsweise mit einer Bilderkennungssoftware, analysiert. Dabei kann beispielsweise ermittelt werden, wie die Löcher in einem Käse über die gesamte Tiefe, d.h. in Strahlungsrichtung, als Funktion der x-Achse verlaufen. Des weiteren kann durch die Gesamtbildanalyse festgestellt werden, wie ein Muskelstrang oder eine Grenzschicht zwischen zwei zusammengefügten Fleischstücken als Funktion der Längsachse verläuft. Es kann das lokale Volumen von Löchern im Käse oder von einem Muskelstrang ermittelt werden. Vorzugsweise erfolgt die Analyse des Grauwertbildes anhand von Referenzdaten, so dass die Auswerteeinheit weiß, um was für eine Fleischstruktur es sich handelt, oder ob der jeweilige Grauwert und/oder dessen Verlauf auf eine Grenzschicht oder einen Fremdkörper schließen lässt. Aufgrund der Analyse des Gesamtbild des Lebensmittelriegels wird festgelegt, wie der Lebensmittelriegel aufgeschnitten und/oder wie die resultierenden Lebensmittelscheiben klassiert werden sollen.

In dem Beispiel gemäß Figur 3a besteht der Lebensmittelriegel aus zwei Teilstücken 13, 14. Durch die Verteilung der Grauwerte kann die Auswertevorrichtung den Verlauf der Grenzschicht 15 erkennen. Es ist aber auch möglich, dass die beiden Teilstücke 13, 14 eine zumindest nahezu identische Struktur aufweisen. In diesem Fall weist nur die Grenzschicht einen anderen Grauton auf, der durch die Bildauswertung erkannt wird.

In dem Beispiel gemäß Figur 3b sind die Scannscheiben eines Lebensmittelriegels dargestellt, der Muskelstränge 11', 11" und eine Fettschicht 12 aufweist. Die jeweilige Fleischstruktur 11', 11", 12 wurde anhand von der Auswerteeinrichtung anhand von Referenzdaten erkannt. Durch das Gesamtbild wird der Verlauf der jeweiligen Strukturen 11', 11". 12 innerhalb des Lebensmittelriegels deutlich. Diese Information kann beim Aufschneiden bzw. zum Klassieren der Lebensmittelscheiben herangezogen werden.

Figur 3c zeigt im Wesentlichen das Beispiel gemäß Figur 3a, nur dass in dem vorliegenden Fall ein Fremdköper 19 vorhanden ist. Die Bilderkennung erkennt den Fremdkörper vorzugsweise dadurch, dass seine Graustufe unerwartet hoch oder niedrig ist.

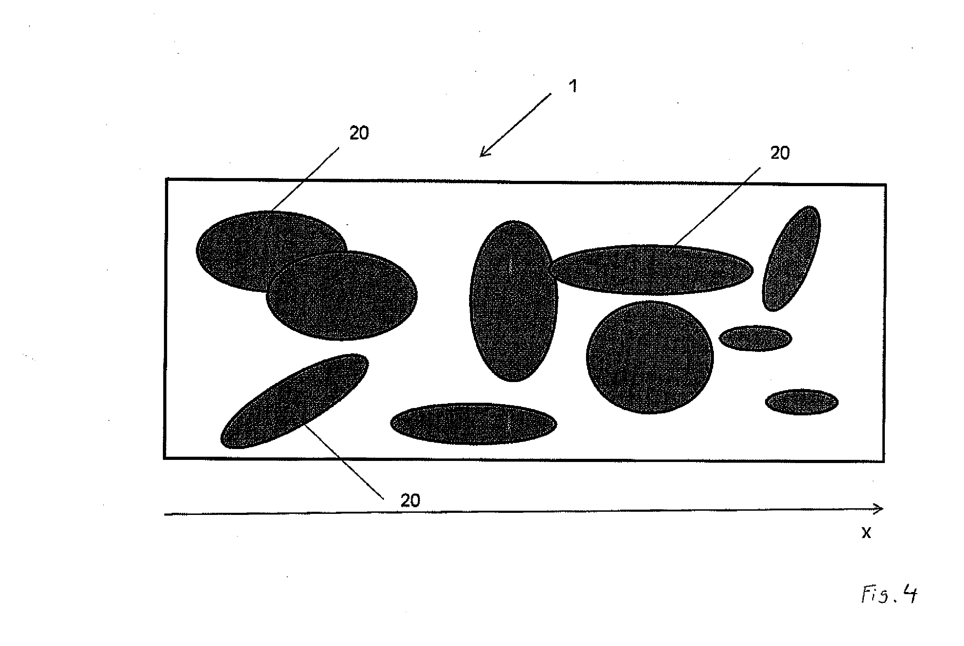

In Figur 4 ist schematisch die Auswertung der Datenmatrix eines Lebensmittelriegels dargestellt. Aufgrund einer Bilderkennung und/oder Referenzdaten erkennt die Bilderkennungssoftware die Lage der Löcher 20 in einem Käseriegel 1. Die Lage der Löcher wird zumindest als Funktion der x-Achse, d. h. der Aufschnittrichtung abgespeichert, so dass letztendlich Daten vorliegen, welche Lebensmittelscheibe welchen Anteil an Löchern aufweist. Aus der Darstellung gemäß Figur 4 ist zu erkennen, dass im vorderen und hinteren Randbereich des Lebensmittelriegels 1 keine Löcher vorhanden sind, so dass diese Bereiche als Gutportion nicht eingesetzt werden können und verworfen werden müssen.

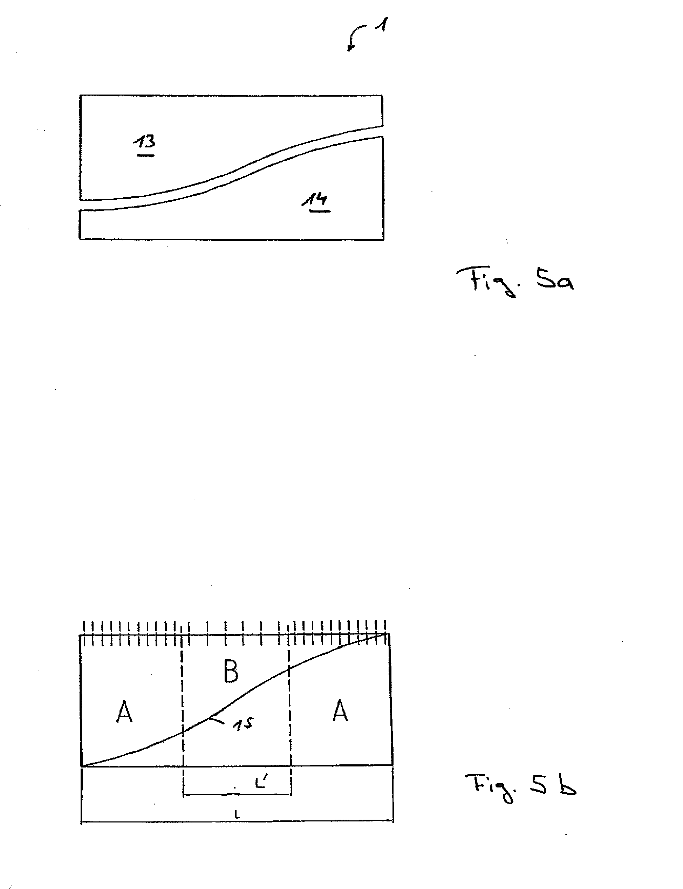

Figur 5 zeigt einen Lebensmittelriegel 1, der aus zwei Teilstücken 13, 14 zusammengesetzt ist. Beispielsweise handelt es sich um Pressschinken. Der Abstand zwischen den Teilstücken ist in Realiter nicht oder nur geringfügig und/oder lokal vorhanden. Dieser Lebensmittelriegel 1 wird ebenfalls mit einem Durchstrahlscanner durchstrahlt, wobei bei diesem Vorgang der Verlauf der Grenzfläche 15 zwischen den beiden Teilstücken 13 und 14 in Abhängigkeit von der Längsachse und/oder dessen Qualität in Bezug auf Form und Farbe ermittelt und als Funktion der Längsachse des Lebensmittelriegels abgespeichert wird. Wie insbesondere in Figur 4 zu erkennen ist, wird diese Information über den Verlauf der Grenzfläche 15 beim Aufschneiden des Lebensmittelriegels und/oder zur Klassierung der erhaltenen Scheiben herangezogen. Es ist zu erkennen, dass der Lebensmittelriegel zwei Bereiche mit Güteklasse A aufweist, in denen die Grenzfläche 15 sich dem Randbereich der jeweiligen Lebensmittelscheibe befindet. In dem vorliegenden Beispiel werden diese Bereiche mit Güteklasse A so aufgeschnitten, dass jede Lebensmittelportion fünf Lebensmittelscheiben mit einer Dicke von 1 mm aufweist, die geschindelt zueinander angeordnet sind, wobei zwischen den jeweiligen Scheiben ein Einlegepapier, das das Verkleben zwischen den beiden Scheiben verhindern soll, eingelegt wird. Der mittlere Bereich mit der Güteklasse B hingegen wird so aufgeschnitten, dass jede Portion 10 Scheiben mit einer Dicke von 2 mm aufweist, die übereinander gestapelt werden, wobei zwischen den Scheiben kein Einlegepapier vorgesehen wird. Der Fachmann versteht, dass das Aufschneiden bzw. klassieren auch nach einem anderen Modus erfolgen kann.

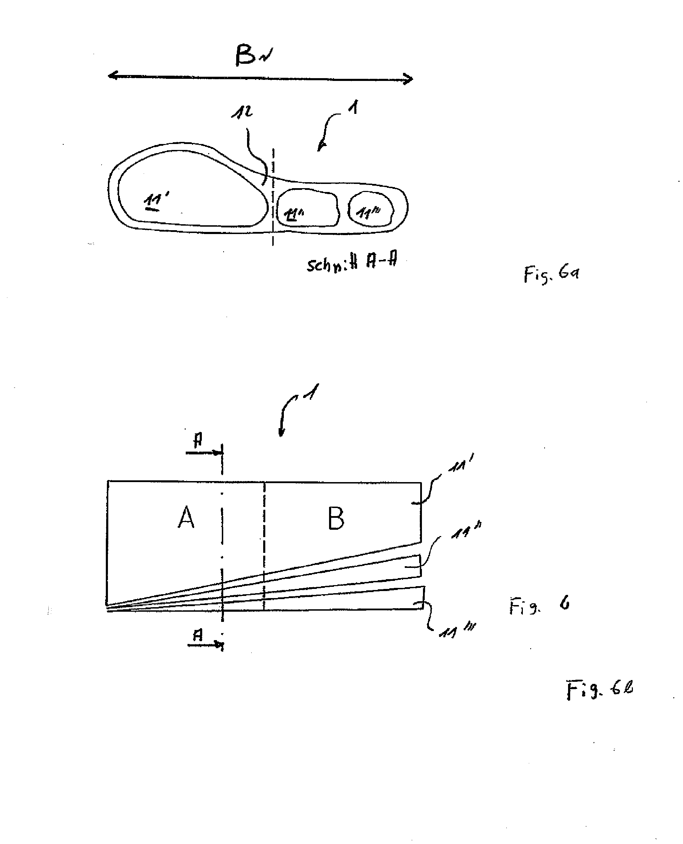

Figur 6 zeigt einen Lebensmittelriegel. In dem vorliegenden Fall handelt es sich beispielsweise um einen Naturschinken, der hier drei Muskelstränge 11' bis 11'" aufweist, die von einer Fettschicht 12 umgeben sind. Wie insbesondere in Figur 2b zu sehen ist, ändert sich der Querschnitt der jeweiligen Muskelstränge mit der Längsachse des Lebensmittelriegels. Dadurch ergeben sich zwei unterschiedliche Güteklassen innerhalb des Lebensmittelriegels nämlich eine Güteklasse A, in der der Muskelstrang 11' den wesentlichen Teil des Querschnittes des Lebensmittelriegels ausmacht und eine Güteklasse B, in der der Muskelstrang 11' immer kleiner wird und der Fettanteil der jeweiligen Lebensmittelscheibe immer größer wird. Auch die Breite Br der jeweiligen Lebensmittelscheibe kann über deren Güteklasse entscheiden. Unterschreitet die jeweilige Lebensmittelscheibe eine gewisse Breite Br, ist sie für Güteklasse A ungeeignet. Der Lebensmittelriegel wird entlang seiner Längsachse, hier senkrecht zur Papierebene, und über die gesamte Breite Br von einem Durchstrahlscanner, in diesem Fall einem Röntgenscanner, durchstrahlt. Bei diesem Durchstrahlvorgang wird die Struktur des Lebensmittelriegels, hier der Verlauf der jeweiligen Muskelstränge und/oder der Fettgehalt ermittelt und diese Daten in Abhängigkeit der Längsachse x abgespeichert. Das Aufschneiden und/oder Klassieren erfolgt dann anhand dieser Daten, so dass ein Teil der resultierenden Portionen Güteklasse A und ein Teil Güteklasse B sind.

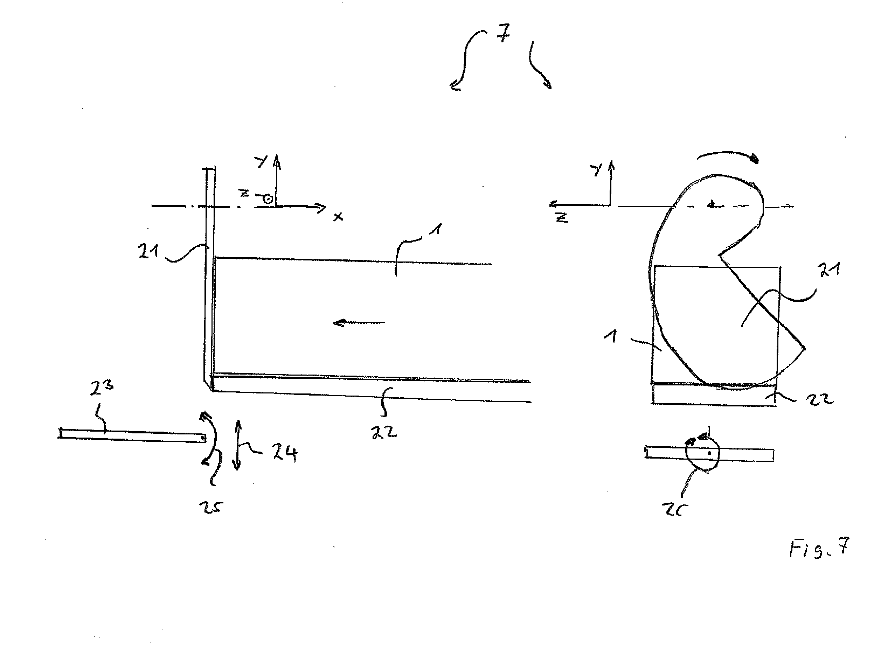

Figur 7 zeigt schematisch einen Slicer 7 in zwei Ansichten. Ein Lebensmittelriegel 1 liegt auf einer Auflage 22 auf und wird wie durch den Pfeil dargestellt in Richtung eines rotierend angetriebenen Schneidmessers 21 gefördert, das von seinem vorderen Ende Lebensmittelscheiben abtrennt, die auf eine Ablage, hier ein Ablagetisch 23, fallen und dort zu einer Portion von beispielsweise zehn Lebensmittelscheiben zusammengefasst werden. Sobald eine Portion komplettiert ist, wird diese von dem Ablagetisch 23 abtransportiert und eine neue Portion kann aufgeschnitten werden. Das Messer 21 ist wie durch das Koordinatensystem dargestellt, in Y und Z-Richtung verstellbar, um den Ort, wo das Messer in den Lebensmittelriegel eintreten soll, bzw. um das Verhältnis zwischen Ziehen und Drücken während des Schneidens einer Lebensmittelscheibe beeinflussen zu können. Der Ablagetisch 23, auf den die abgeschnittenen Lebensmittelscheiben fallen, ist vorzugsweise in seiner Höhe, um eine erste Achse und/oder eine zweite Achse schwenkbar vorgesehen, um ein optimales Ablagebild der jeweiligen Portionen zu erzielen. Erfindungsgemäß oder bevorzugt werden nun die Drehgeschwindigkeit des Messers, die Lage des Messers relativ zum Produkt und/oder die Stellung des Ablagetisches in Abhängigkeit der ermittelten Daten verändert. Beispielsweise kann es vorteilhaft sein, in einem Abschnitt des Lebensmittelriegels, der vornehmlich aus weicheren Strukturen besteht, die Drehgeschwindigkeit zu reduzieren. Weiterhin kann es vorteilhaft sein, je nach Struktur des Produktes den Auftreffort und/oder das Verhältnis zwischen Ziehen und Drücken beim Schneiden zu verändern. Bei weichen Produkten sollte vorzugsweise das Messer vornehmlich eine ziehende und weniger eine drückende Bewegung ausführen. Da die innere und/oder äußere Struktur auch Einfluss auf den Ablageort der jeweiligen Produktscheibe hat, ist es erfindungsgemäß oder bevorzugt vorgesehen, auch die Lage des Tisches in seiner Höhe und/oder in seinem Neigungswinkel in Abhängigkeit der jeweiligen inneren und/oder äußeren Struktur des Lebensmittelriegels zu verändern.

### Bezugszeichenliste:

- 1: Lebensmittelriegel
- 2: Lebensmittelscheibe
- 3: Waage
- 4: Durchstrahlscanner
- 4.1: Sender, Empfänger
- 4.2: Empfänger, Sender
- 5: Transportmittel
- 6: Vorrichtung
- 7: Aufschneidevorrichtung, Slicer
- 8: Portionierband
- 9: Anfangsbereich des Lebensmittelriegels 1
- 10: Endbereich des Lebensmittelriegels 1
- 11: Muskelstrang im Fleisch
- 12: Fettanteil des Fleisches
- 13: erstes Teilstück des Lebensmittelriegels, erster Schinken
- 14: zweites Teilstück des Lebensmittelriegels, zweiter Schinken
- 15: Grenzfläche zwischen erstem und dem zweiten Teilstück 13, 14
- 16: Unvollständige Portion
- 17: Transportrichtung
- 18: Scannscheibe
- 19: Fremdkörper
- 20: Loch im Käse
- 21: Schneidmesser
- 22: Auflage des Lebensmittelriegels
- 23: Ablage, Ablagetisch
- 24: Doppelpfeil, Höhenverstellung der Ablage
- 25: Doppelpfeil, Drehung der Ablage um eine erste Achse
- 26: Doppelpfeil, Drehung der Ablage um eine zweite Achse
- a: Datenpunkte entlang der Breite des Lebensmittelriegels
- A: Güteklasse A
- B: Güteklasse B
- b: Datenpunkte entlang der Länge des Lebensmittelriegels
- Br: Breite des Lebensmittelriegels
- Br': Breite des Scannbereichs
- H: Höhe des Lebensmittelriegels
- L: verwertbare Länge des Lebensmittelriegels
- L': Teillänge verminderter Qualität
- I: Länge einer Portion
- 1-n: Anzahl der Portionen pro Lebensmittelriegel
- x: Längskoordinate des Lebensmittelriegels

## Patentansprüche

1. Verfahren zur Erzeugung von Lebensmittelportionen mit einer Aufschneidevorrichtung (7), insbesondere einem Slicer, die aus mindestens einer Lebensmittelscheibe (2) bestehen und die mit der Aufschneidevorrichtung (7) von einem Lebensmittelriegel (1) abgeschnitten wird, wobei von dem Lebensmittelriegel vor dem Aufschneiden der jeweiligen Lebensmittelportion mit einem Durchstrahlscanner (4), bevorzugt mit einem Röntgenscanner, Daten über dessen innere und/oder äußere Struktur erfasst werden, wobei
- die ermittelten Daten in einer Daten-Matrix erfasst werden,
- diese Matrix ausgewertet wird und
- die Auswertung zur Steuerung des Aufschneidevorgangs und/oder zum Klassierung der aufgeschnitten Lebensmittelscheiben herangezogen wird,
**dadurch gekennzeichnet, dass** anhand der Daten-Matrix die lokale Höhe des Lebensmittelriegels ermittelt wird.

2. Verfahren nach Anspruch 1, **dadurch gekennzeichnet, dass** die Matrix aus Bildpunkten, insbesondere Grauwerten, besteht.

3. Verfahren nach Anspruch 1 oder 2, **dadurch gekennzeichnet, dass** die Daten-Matrix eine zweidimensionale oder dreidimensionale Darstellung der Raumdaten des Lebensmittelriegels ist.

4. Verfahren nach Anspruch 1 - 3, **dadurch gekennzeichnet, dass** der Durchstrahlscanner (4) Daten von n Scannscheiben ermittelt, die hintereinander entlang der Längsachse (x) des Lebensmittelriegels angeordnet sind und die zu der Matrix zusammengesetzt werden.

5. Verfahren nach Anspruch 4, **dadurch gekennzeichnet, dass** pro Scannscheibe mehrere Messwerte, vorzugsweise über die gesamte Breite (Br) des Lebensmittelriegels ermittelt werden.

6. Verfahren nach einem der voranstehenden Ansprüche, **dadurch gekennzeichnet, dass** die Auswertung der Daten-Matrix mit einer Bilderkennungssoftware erfolgt.

7. Verfahren nach einem der voranstehenden Ansprüche, **dadurch gekennzeichnet, dass** die Auswertung anhand von Referenzdaten erfolgt.

8. Verfahren nach einem der voranstehenden Ansprüche, **dadurch gekennzeichnet, dass** die Daten Informationen über den Verlauf mindestens eines Muskelstranges (11'-11"') in dem Lebensmittel liefern und dass diese Information zum Aufschneiden des Lebensmittelriegels und/oder zum Klassieren der Lebensmittelscheiben in Güteklassen (A, B) herangezogen werden.

9. Verfahren nach einem der voranstehenden Ansprüche, **dadurch gekennzeichnet, dass** der Lebensmittelriegel (1) aus mehreren Teilstücken (13, 14) besteht, die entlang einer Grenzfläche (15) aneinanderstoßen, wobei die Daten-Matrix Information über den Verlauf der Grenzfläche (15) liefert und diese Information zum Aufschneiden des Lebensmittelriegels und/oder zum Klassieren der Lebensmittelscheiben in Güteklassen (A, B) herangezogen werden.

10. Verfahren nach einem der voranstehenden Ansprüche, **dadurch gekennzeichnet, dass** anhand der ermittelten Daten die verwertbare Länge (L) ermittelt wird.

11. Verfahren nach Anspruch 10, **dadurch gekennzeichnet, dass** die verwertbare Länge in n Portionen aufgeschnitten wird, die jeweils mindestens das geforderte Mindestgewicht aufweisen, wobei die letzte Portion mit Lebensmittelscheiben von dem nächsten Lebensmittelriegel ergänzt wird und die Aufschneidevorrichtung anhand der ermittelten Daten weiß, welcher Gewichtsanteil und/oder wie viele Scheiben diese Portion fehlen und dementsprechend den Aufschneidevorgang steuert.

12. Verfahren nach einem der Patentansprüche 10 oder 11, **dadurch gekennzeichnet, dass** anhand der ermittelten Daten die verwertbare Länge (L) eines Lebensmittelriegels in n Portionen aufgeteilt wird, wobei jede Portion mindestens das geforderte Mindestgewicht aufweist.

13. Verfahren nach einem der voranstehenden Ansprüche, **dadurch gekennzeichnet, dass** die Datenmatrix lokale Temperaturdaten und/oder lokale Daten über den Salzgehalt aufweist.

14. Verfahren nach einem der voranstehenden Ansprüche, **dadurch gekennzeichnet, dass** die Daten zur Steuerung der Schneidgeschwindigkeit, und/oder zur Steuerung der Position des Schneidmessers eingesetzt werden.

15. Verfahren nach einem der voranstehenden Ansprüche, **dadurch gekennzeichnet, dass** die Daten zur Steuerung der Portionsbildungsparameter eingesetzt werden.
